(19) Europäisches Patentamt
European Patent Office
Office européen des brevets

(11) **EP 2 543 842 A2**

(12) **EUROPÄISCHE PATENTANMELDUNG**

(43) Veröffentlichungstag:
**09.01.2013  Patentblatt 2013/02**

(51) Int Cl.:
***F02B 29/04*** *(2006.01)*

(21) Anmeldenummer: **12175088.9**

(22) Anmeldetag: **05.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.07.2011   DE 102011078751**

(71) Anmelder: **Behr GmbH & Co. KG**
**70469 Stuttgart (DE)**

(72) Erfinder:
• **Diem, Johannes**
  **71287 Weissach (DE)**
• **Müller, Rolf, Dipl.-Ing.**
  **71711 Steinheim (DE)**
• **Haßdenteufel, Klaus, Dr.-Ing.**
  **70839 Gerlingen (DE)**

(74) Vertreter: **Grauel, Andreas**
**Grauel IP**
**Patentanwaltskanzlei**
**Presselstraße 10**
**70191 Stuttgart (DE)**

(54) **Saugrohre, Ladeluftkühler, Saugrohrmodul, Motorsystem und Verfahren zur Dimensionierung derselben**

(57)   Die vorliegende Erfindung betrifft ein Saugrohrmodul für einen Motor (102) eines Fahrzeugs, mit einem Ladeluftkühler (106), einem dem Ladeluftkühler nachgeschalteten Saugrohr (108) und einem dem Ladeluftkühler vorgeschalteten Saugrohr (104).

FIG 1

EP 2 543 842 A2

**Beschreibung**

Die vorliegende Erfindung bezieht sich auf Saugrohre, einen Ladeluftkühler, ein Saugrohrmodul und ein Motorsystem eines Fahrzeugs sowie auf Verfahren zur Dimensionierung derselben.

Mittels eines Ladeluftkühlers wird die Temperatur der Ladeluft verringert, die einem Verbrennungsmotor zugeführt wird. Der Ladeluftkühler kann in ein Saugrohrmodul integriert sein.

Es ist die Aufgabe der vorliegenden Erfindung ein verbessertes Saugrohr, einen verbesserten Ladeluftkühler, ein verbessertes Saugrohrmodul und ein verbessertes Motorsystem eines Fahrzeugs sowie verbesserte Verfahren zur Dimensionierung derselben zu schaffen.

Diese Aufgabe wird durch Vorrichtungen und Verfahren gemäß den Hauptansprüchen gelöst.

Der vorliegenden Erfindung liegt die Erkenntnis zugrunde, dass bei Saugrohren mit integriertem Ladeluftkühler ein Zusammenhang zwischen Massenstrom- und Temperaturgleichverteilung auf die Zylinder und den Volumina vor und nach dem integriertem Ladeluftkühler besteht. Dies gilt insbesondere für Anwendungen mit HD-AGR-Eindüsungen (Hochdruck-Abgasrückführungs-Eindüsungen) in das Saugrohrvolumen nach dem integrierten Ladeluftkühler. Durch Berücksichtigung dieses Zusammenhangs kann ein optimales Saugrohrvolumen für Saugrohrmodule mit integriertem Ladeluftkühler realisiert werden.

Durch eine geeignete Auslegung der Volumina für Saugrohre mit integriertem Ladeluftkühler und dem Vorsehen geeigneter Bauräume kann eine bestmögliche Ladeluft-Massenstrom- und -Temperaturverteilung auf die Zylinder erhalten werden. Vorteilhafterweise kann eine optimale Temperaturverteilung und Massenstromverteilung auf die Zylinder bei ausreichender Ladeluftkühlung und minimalem Bauraum erzielt werden.

Die vorliegende Erfindung schafft ein ausgangsseitiges Saugrohr eines Saugrohrmoduls mit einem integrierten Ladeluftkühler für einen Motor eines Fahrzeugs, bei dem ein Volumen des ausgangsseitigen Saugrohrs abhängig von einem Hubvolumen des Motors und einer Anzahl von Abgasrückführung-Eindüsungen des Motors bestimmt ist.

Bei dem Motor kann es sich um einen Verbrennungsmotor, beispielsweise eines Personenkraftwagens oder eines Lastkraftwagens handeln. Das Saugrohrmodul kann zwischen einem Verdichter und einem Einlassventil des Motors angeordnet werden, um die dem Motor zugeführte Luft zu kühlen. Das Saugrohrmodul kann ein eingangsseitiges Saugrohr, den Ladeluftkühler und das ausgangsseitige Saugrohr umfassen. In Bezug auf eine Durchströmungsrichtung eines Luftstroms durch das Saugrohrmodul können das eingangsseitige Saugrohr vor dem Ladeluftkühler und das ausgangsseitige Saugrohr hinter dem Ladeluftkühler angeordnet sein. Der Ladeluftkühler ist ausgebildet, um den Luftstrom zu kühlen. Das Hubvolumen des Motors kann auch als Hubraum bezeichnet werden. Durch die Abgasrückführung kann beim Betrieb des Motors erzeugtes Abgas dem Motor erneut zugeführt werden. Bei dem Volumen des ausgangsseitigen Saugrohrs kann es sich um ein Innenvolumen des ausgangsseitigen Saugrohrs handeln, das mit der Luft des Luftstroms gefüllt werden kann.

Das Volumen des ausgangsseitigen Saugrohrs kann abhängig von dem Hubvolumen des Motors und einem von der Anzahl von Abgasrückführung-Eindüsungen des Motors abhängigen Rückführungsparameter bestimmt sein. Der jeweilige Rückführungsparameter kann vorbestimmt sein. Die Rückführungsparameter können beispielsweise mittels geeigneter Versuchsanordnungen vorbestimmt werden. Werte der Rückführungsparameter können beispielsweise in einem Speicher hinterlegt und zur Ausführung des Verfahrens abhängig von der Anzahl von Abgasrückführung-Eindüsungen aus dem Speicher ausgelesen werden. Auf diese Weise kann für unterschiedliche Motoren auf einfache Weise jeweils ein geeignetes Volumen des ausgangsseitigen Saugrohrs bestimmt werden.

Das Volumen des ausgangsseitigen Saugrohrs kann einem Produkt aus dem Hubvolumen und dem Rückführungsparameter entsprechen.

Beispielsweise kann der Rückführungsparameter bei einer Abgasrückführung-Eindüsung einen Wert zwischen 1,1 und 1,9 aufweisen. Bei einer Abgasrück. führung-Eindüsung für zwei Zylinder kann der Rückführungsparameter einen Wert zwischen 0,6 und 1,6 aufweisen. Bei einer Abgasrückführung-Eindüsung pro Zylinder kann der Rückführungsparameter einen Wert zwischen 0,4 und 1,1 aufweisen. Bei keiner Abgasrückführung-Eindüsung kann der Rückführungsparameter einen Wert zwischen 0,4 und 1,1 aufweisen. Somit kann für jede vorgesehene Anzahl von Abgasrückführung-Eindüsungen ein geeigneter Wert oder ein geeigneter Wertebereich für den entsprechenden Rückführungsparameter vorgesehen sein.

Die vorliegende Erfindung schafft ein Verfahren zur Dimensionierung eines ausgangsseitigen Saugrohrs eines Saugrohrmoduls mit einem integrierten Ladeluftkühler für einen Motor eines Fahrzeugs, das folgenden Schritt umfasst:

Bestimmen eines Volumens des ausgangsseitigen Saugrohrs abhängig von einem Hubvolumen des Motors und einer Anzahl von Abgasrückführung-Eindüsungen des Motors.

Die vorliegende Erfindung schafft ferner ein eingangsseitiges Saugrohrs eines Saugrohrmoduls mit einem integrierten Ladeluftkühler für einen Motor eines Fahrzeugs, bei dem ein Volumen des eingangsseitigen Saugrohrs abhängig von einem Durchmesser einer Eingangsöffnung des Saugrohrmoduls, einer Querschnittsfläche des integrierten Ladeluftkühlers und einem Volumenparameter bestimmt ist.

Durch die Eingangsöffnung kann der Luftstrom in das eingangsseitige Saugrohr des Saugrohmoduls eingeführt werden. Der Durchmesser der Eingangsöffnung kann durch eine Zuführleitung oder eine Drosselklappe definiert werden. Bei einem nicht runden Querschnitt der Eingangsöffnung kann ein hydraulischer Durchmesser der Eingangsöffnung ermittelt und zum Bestimmen des Volumens eingesetzt werden. Bei der Querschnittsfläche des integrierten Ladeluftkühler kann es sich um eine Fläche handeln, durch die der Luftstrom in den Ladeluftkühler hinein- und hindurchströmen kann. Der Volumenparameter kann vorbestimmt sein. Der Volumenparameter kann beispielsweise mittels geeigneter Versuchsanordnungen vorbestimmt werden. Ein Wert oder Wertebereich des Volumenparameters kann beispielsweise in einem Speicher hinterlegt und zur Ausführung des Verfahrens aus dem Speicher ausgelesen werden. Informationen über den Durchmesser der Eingangsöffnung und die Querschnittsfläche des integrierten Ladeluftkühlers können jeweils als ein elektrisches Signal vorliegen und können einer Verarbeitungsvorrichtung zur Durchführung des Verfahrens über eine geeignete Schnittstelle zugeführt werden. Die Information über das Volumen des eingangsseitigen Saugrohrs kann von der Verarbeitungsvorrichtung über eine geeignete weitere Schnittstelle ausgegeben werden.

Gemäß einer Ausführungsform kann die Querschnittsfläche des integrierten Ladeluftkühlers abhängig von einer Leistung des Motors und einem Zylinderdurchmesser des Motors bestimmt sein. Dabei kann eine die Querschnittsfläche bestimmende Breite des Ladeluftkühlers durch einen maximal zulässigen Ladeluftdruckverlust bestimmt sein. Eine die Querschnittsfläche bestimmende Breite des Ladeluftkühlers kann durch eine Länge des Motors bestimmt sein.

Das Volumen des eingangsseitigen Saugrohrs kann einem Produkt aus dem Durchmesser einer Eingangsöffnung des Saugrohrmoduls, der Querschnittsfläche des integrierten Ladeluftkühlers und dem Volumenparameter entsprechen.

Beispielsweise kann der Volumenparameter bei ein einer mittigen Anordnung der Eingangsöffnung einen Wert zwischen 0,4 und 1,6 aufweisen. Bei einer seitlichen Anordnung der Eingangsöffnung kann der Volumenparameter einen Wert zwischen 0,4 und 0,05 aufweisen.

Die vorliegende Erfindung schafft ferner ein Verfahren zur Dimensionierung eines eingangsseitigen Saugrohrs eines Saugrohrmoduls mit einem integrierten Ladeluftkühler für einen Motor eines Fahrzeugs, das den folgenden Schritt umfasst:

Bestimmen eines Volumens des eingangsseitigen Saugrohrs abhängig von einem Durchmesser einer Eingangsöffnung des Saugrohrmoduls, einer Querschnittsfläche des integrierten Ladetuftkühiers und einem Volumenparameter.

Die vorliegende Erfindung schafft ferner einen Ladeluftkühler für ein Saugrohrmodul für einen Motor Fahrzeugs, bei dem eine Tiefe des Ladeluftkühlers abhängig von einer Literleistung des Motors, eine Kühlerbreite des Ladeluftkühlers abhängig von einer Leistung des Motors und eine Kühlerhöhe des Ladeluftkühlers abhängig von einer Zylinderzahl des Motors bestimmt ist.

Der Ladeluftkühler kann als ein integrierter Ladeluftkühler zwischen dem eingangsseitigen Saugrohr und dem ausgangsseitigen Saugrohr des Saugrohrmoduls angeordnet werden.

Die Tiefe des Ladeluftkühlers kann aus einer Summe aus einem ersten Summanden und einem Produkt aus einem ersten Faktor und der Literleistung des Motors bestimmt sein. Der erste Faktor kann den Wert 0,65 und der erste Summand den Wert 37 aufweisen. Die Kühlerbreite des Ladeluftkühlers kann aus einer Summe aus einem Produkt aus einem zweiten Faktor und der quadrierten Leistung des Motors, einem Produkt aus einem negativen dritten Faktor und der Leistung des Motors sowie einem zweiten Summanden bestimmt sein. Der zweite Faktor kann den Wert 0,0031, der dritte Faktor den Wert -0,1656 und der zweite Summand den Wert 48,679 aufweisen. Die Kühlerhöhe des Ladeluftkühlers kann aus einem Produkt eines vierten Faktors mit der Zylinderzahl des Motors bestimmt sein. Der vierte Faktor kann den Wert 85 aufweisen. Arzt stelle der genannten Werte für die Summanden und Faktoren können ähnliche Werte gesetzt werden, beispielsweise Werte die eine bestimmte vorgegebene Abweichung zu den genannten Werten aufweisen. Auf diese Weise können die Werte für die Abmessungen des Ladeluftkühlers eine Toleranz aufweisen, die beispielsweise +/- 15mm aufweisen kann.

Die vorliegende Erfindung schafft ferner einen Verfahren zur Dimensionierung eines Ladeluftkühlers für ein Saugrohrmodul für einen Motor eines Fahrzeugs, das die folgenden Schritte umfasst:

Bestimmen einer Tiefe des Ladeluftkühlers abhängig von einer Literleistung des Motors;

Bestimmen einer Kühlerbreite des Ladeluftkühlers abhängig von einer Leistung des Motors; und

Bestimmen einer Kühlerhöhe des Ladeluftkühlers abhängig von einer Zylinderzahl des Motors.

Die vorliegende Erfindung schafft ferner ein Verfahren zur Herstellung eines Saugrohrmoduls mit einem integrierten Ladeluftkühler für einen Motor eines Fahrzeugs, das die folgenden Schritte umfasst:

Bereitstellen eines Ladeluftkühlers;

Bereitstellen eines dem Ladeluftkühler nachgeschalteten Saugrohrs, das ein gemäß einer Ausführungsform der vorliegenden Erfindung dimensionierte Volumen aufweist;

Bereitstellen eines dem Ladeluftkühler vorgeschalteten Saugrohrs, das ein gemäß einer Ausführungsform der vorliegenden Erfindung dimensionierte Volumen aufweist; und

Zusammensetzen des Saugrohrmoduls aus dem Ladeluftkühler, dem nachgeschalteten Saugrohr und dem vorgeschalteten Saugrohr,

Das nachgeschaltete Saugrohr kann somit ein Innenvolumen aufweisen, das von einem Hubvolumen des Motors und einer Anzahl von Abgasrückführung-Eindüsungen des Motors abhängig ist. Das vorgeschaltete Saugrohr kann ein Innenvolumen aufweisen, das von einem Durchmesser einer Eingangsöffnung des Saugrohrmoduls, einer Querschnittsfläche des integrierten Ladeluftkühlers und einem Volumenparameter abhängig ist. Das Saugrohrmodul besteht im Wesentlichen aus einem Kunststoffgehäuse in das ein Alu-Ladeluftkühler eingeschoben, eingeklebt oder eingeschweißt wird.

Die vorliegende Erfindung schafft ferner ein Saugrohrmodul für einen Motor eines Fahrzeugs, mit folgenden Merkmalen:

einem Ladeluftkühler gemäß einer beschriebenen Ausführungsform;

ein dem Ladeluftkühler nachgeschaltetes Saugrohr gemäß einer beschriebenen Ausführungsform; und

ein dem Ladeluftkühler vorgeschaltetes Saugrohr gemäß einer beschriebenen Ausführungsform.

Das Saugrohrmodul kann mittels des Verfahrens zur Herstellung eines Saugrohrmoduls hergestellt sein. Vorteilhafterweise weisen die Saugrohre Saugrohrmoduls Dimensionen auf, die eine optimale Temperatur und Massenstromverteilung auf die Zylinder bei ausreichender Ladeluftkühlung und minimalen Bauraum gewährleisten.

Die vorliegende Erfindung schafft ferner ein Motorsystem eines Fahrzeugs mit einem Saugrohrmodul gemäß einer beschriebenen Ausführungsform. Aufgrund der Dimensionierung des Saugrohrmoduls ist das Saugrohrmodul auf die Parameter des Motors abgestimmt.

Vorteilhafte Ausführungsbeispiele der vorliegenden Erfindung werden nachfolgend Bezug nehmend auf die beiliegenden Zeichnungen näher erläutert. Es zeigen:

Fig. 1    eine Darstellung eines Motors mit einem Saugrohrmodul;

Fig. 2    eine graphische Darstellung von das Saugrohrmodul betreffenden Einflussfaktoren;

Fig. 3    schematische Darstellung eines Ladeluftkühlers;

Fig. 4    eine graphische Darstellung der Kühlertiefe über die Leistung;

Fig. 5    eine graphische Darstellung der Kühlerbreite über die Leistung; und

Fig. 6    eine graphische Darstellung der Kühlerhöhe über die Zylinderzahl.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

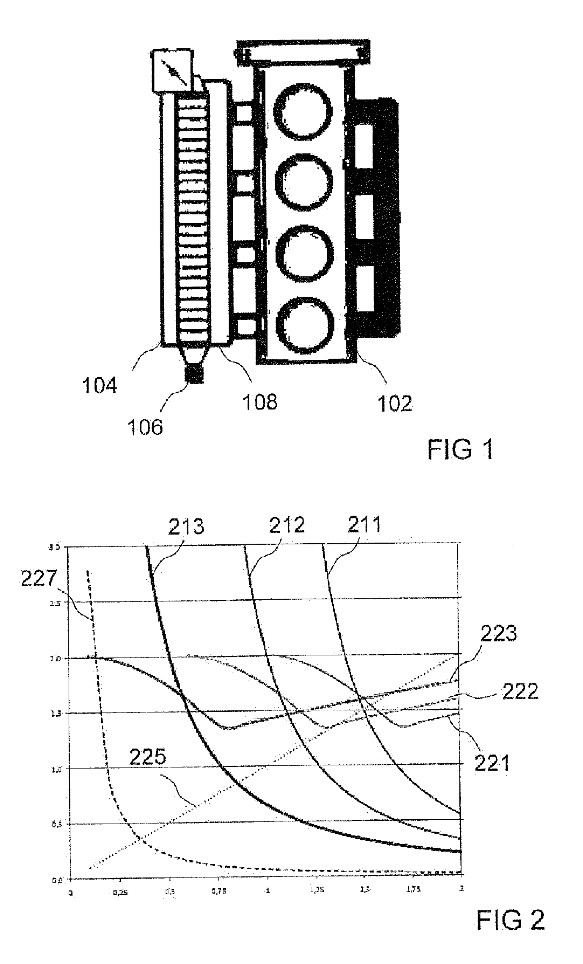

Fig. 1 zeigt eine Darstellung eines Motors 102 mit einem Saugrohrmodul gemäß einem Ausführungsbeispiel der vorliegenden Erfindung. Der Motor 102 weist gemäß diesem Ausführungsbeispiel vier Zylinder auf. Das Saugrohrmodul besteht aus einem vorgeschalteten Saugrohr 104, einem Ladeluftkühler 106 und einem nachgeschaltetes Saugrohr 108. Der Ladelaufkühler 106 ist zwischen dem vorgeschaltetes Saugrohr 104 und dem nachgeschaltete Saugrohr 108 angeordnet. Das Saugrohrmodul besteht im Wesentlichen aus einem Kunststoffgehäuse in das ein Alu-LLK 106 eingeschoben, eingeklebt oder eigeschweißt ist. Im Betrieb des Saugrohrmoduls kann ein Luftstrom entlang einer Strömungsrichtung von dem vorgeschalteten Saugrohr 104 in den Ladeluftkühler 106, von dem Ladeluftkühler 106 in das nachgeschaltete Saugrohr 108 und von dem nachgeschalteten Saugrohr 108 in die Zylinder des Motors 102 strömen. Beim Durchströmen des Ladeluftkühlers 106 wird der Luftstrom durch den Betrieb des Ladeluftkühlers 106 gekühlt.

Die vor- bzw. nachgeschalteten Saugrohre sind bevorzugt Teil Saugrohrmoduls und stellen Gehäuseabschnitte des Saugrohrmodulgehäuses dar.

Das vorgeschaltete Saugrohr 104 weist eine seitlich angeordnete Eingangsöffnung auf, über die der Luftstrom in das vorgeschaltete Saugrohr 104 einströmen kann. Das vorgeschaltete Saugrohr 104 weist ein Innenvolumen auf, in dem sich die eingeströmte Luft verteilen kann. Das Innenvolumen des vorgeschalteten Saugrohrs 104 wird auf einer Seite durch eine Randfläche des angrenzenden Ladeluftkühlers 106 begrenzt. Die Randfläche entspricht der Größe nach einer Querschnittsfläche des Ladeluftkühlers 106, durch die der Luftstrom strömen kann.

Gemäß diesem Ausführungsbeispiel ist das Innenvolumen des vorgeschalteten Saugrohrs 104 abhängig von einem hydraulischen Durchmesser der Eingangsöffnung des vorgeschalteten Saugrohrs 104 und der Querschnittsfläche des Ladeluftkühlers 106 dimensioniert. Dabei ergibt sich eine Größe des Innenvolumens aus einem Produkt aus dem hydraulischen Durchmesser, der Querschnittsfläche und einem vorbestimmten Faktor.

Das nachgeschaltete Saugrohr 108 weist Ausgangsöffnungen zu den Zylindern des Motors 102 auf, über die der Luftstrom in den Motor 102 einströmen kann. Zudem kann das nachgeschaltete Saugrohr 108 eine oder mehrere Einlassöffnungen oder Eindüsungen für einen rückgeführten Abgasstrom des Motors 102 aufweisen. Das nachschaltete Saugrohr 108 weist ein Innenvolumen auf, in dem sich die aus dem Ladeluftkühler 106 ausströmende Luft und gegebenenfalls das aus den Eindüsungen ausströmende Abgas verteilen kann.

Gemäß diesem Ausführungsbeispiel ist das Innenvolumen des nachgeschalteten Saugrohrs 108 abhängig von einem Hubvolumen des Motors 102 und einer Anzahl von vorhandenen Eindüsungen dimensioniert, Dabei ergibt sich eine Größe des Innenvolumens aus einem Produkt aus dem Hubvolumen und einem vorbestimmten Faktor, der wiederum von Anzahl der vorhandenen Eindüsungen abhängig ist.

Zur Herstellung des in Fig. 1 gezeigten Saugrohrmoduls können abhängig von dem Motor 102, zusammen mit dem das Saugrohrmodul eingesetzt wird, zunächst die Volumen der Saugrohre 104, 108 sowie der Ladeluftkühler dimensioniert werden. Anschließend können entsprechend dimensionierte Saugrohre 104, 108 sowie der entsprechend dimensionierte Ladeluftkühler 104 ausgewählt oder gefertigt werden und zu dem Saugrohrmodul zusammengesetzt werden. Die Fertigung oder Auswahl kann automatisiert basierend auf bekannten, erfassten oder eingegebenen Werten oder Parameter bezüglich des Motors sowie des Saugrohrmoduls erfolgen.

Im Folgenden wird auf das Sammlervolumen eingegangen, also auf das Saugrohrvolumen nach dem integrierten Ladeluftkühler 106.

Der Hauptfaktor für die Ladeluft-Massenstrom- und Temperaturverteilung des Ladeluft-Massenstroms auf die Zylinder des Motors 102 ist das Saugrohrvolumen nach dem integrierten Ladeluftkühler 104, das auch als Sammlervolumen bezeichnet wird. In Abhängigkeit des zur Verfügung stehenden Volumens kann eine Drucknivellierung zwischen den Zylindereinlässen und somit eine Massenstromgleichverteilung auf die Zylinder erfolgen. Für HD-AGR-Motoren ist dann noch die Anzahl der Eindüsungen für Abgas in das Sammlervolumen nach dem integrierten Ladetuftküht 104 von großem Einfluss.

Fig. 2 visualisiert die Zusammenhänge zwischen den Einflussfaktoren und die Bewertung bezüglich einer Optimierung des Sammlervolumens des nachgeschalteten Saugrohrs 108 am Beispiel eines 4-Zylinder-Motors. Auf der Ordinate ist aufgetragen das Verhältnis Sammlervolumen zu Hubvolumen des Motors 102. Somit für das Beispiel eines 4-Zylinder-Motors die Temperaturverteilung, der Druckverlust und das Sammlervolumen aufgetragen über dem Verhältnis Sammlervolumen/Hubvolumen.

Gezeigt ist eine Temperaturverteilung 211 für den Fall einer einzigen AGR-Eindüsung, eine Temperaturverteilung 212 bei zwei AGR-Eindüsungen und eine Temperaturverteilung 213 ohne AGR oder mit einer zylinderentsprechenden Anzahl an AGR-Eindüsungen, Ferner sind eine Bewertung 221 mit einer einzigen AGR-Eindüsung, eine Bewertung 222 bei zwei AGR-Eindüsungen und eine Bewertung 223 ohne AGR oder mit einer zylinderentsprechenden Anzahl an AGR-Eindüsungen gezeigt. Schließlich sind das Sammlervolumen 225 und der Druckverlust 227 in mbar aufgetragen.

Die Druckverluste 227 im Sammlervolumen sinken deutlich mit steigendem Verhältnis zwischen Sammlervolumen und Hubvolumen. Dies ergibt sich aus weniger Umlenkungen bzw. einer bessere Drucknivellierung, Für die Betrachtung von verschiedene Anzahlen von AGR-Eindüsungen, wobei bei dem Beispiels des 4.Zylinder-Motors eine, zwei oder vier Eindüsungen sinnvoll sind, ergibt sich eine Verbesserung der Temperaturverteilungen mit steigendem Sammlervolumen und besonders mit steigender Anzahl von Eindüsungen, wie es in Fig. 2 exemplarische durch die Kurven 211, 212, 213 für eine, zwei oder vier Eindüsungen gezeigt ist.

Für das Vornehmen einer Optimierung des Sammlervolumens sind die wesentlichen Faktoren der Druckabfall der Ladeluft im Sammlervolumen (Massen-stromverteilung proportional), die Temperaturverteilung der Ladeluft (abhängig von der Anzahl der AGR-Eindüsungen) auf die Zylinder und dem Sammlervolumen (Bauraumvolumen) selbst. Die Temperaturveneilung entspricht dabei einem Temperaturunterschied ΔT zwischen den Zylindern. Somit ergibt sich für die Bewertung des optimalen Sammlervolumen gemäß diesem Ausführungsbeispiel ein Verhältnis von:

Sammlervolumen /Hubvolumen = 1,25 - 1,75; für den Falleiner AGR-Eindüsung.

Sammlervolumen /Hubvolumen = 0,75 - 1,5; für den Fall einer AGR-Eindüsung für zwei Zylinder für das Beispiel des 4-Zylinder-Motors (bzw. 1,5 - 2,5 Zylinder bei 3- und 5-Zylinder-Motoren).

Sammlervolumen/Hubvolumen = 0,5 - 1,0; für den Fall einer der Zylinderzahl entsprechenden Anzahl an AGR-Eindüsungen. Dies entspricht einer Anzahl von vier Eindüsungen für das Beispiel des 4-Zylindermotors.

Sammlervolumen/Hubvolumen = 0,5 - 1,0; für Sammlervolumen ohne AGR-Zumischungen.

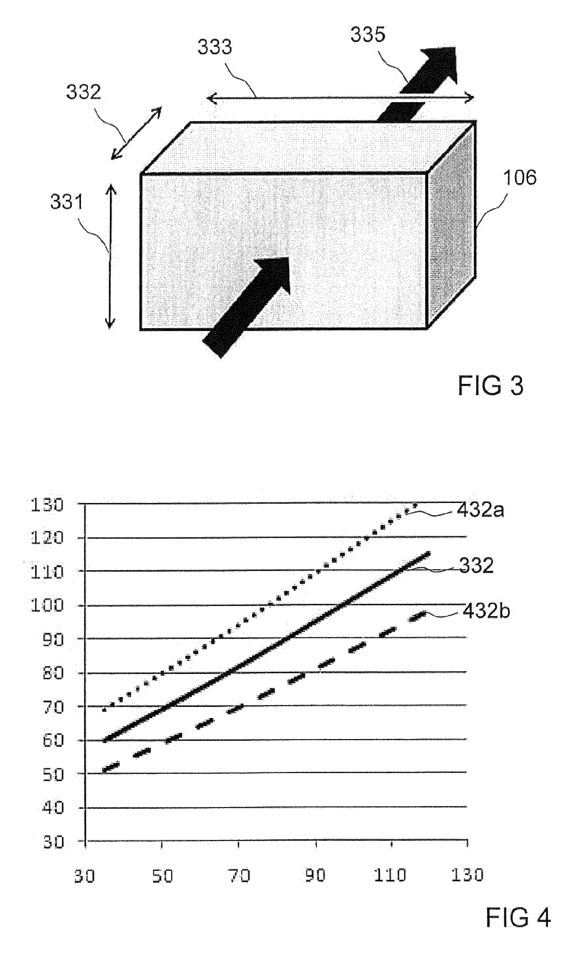

Fig. 3 zeigt eine schematische Darstellung eines Ladetuftkühiers 106, gemäß einem Ausführungsbeispiel der vorliegenden Erfindung. Der Ladeluftkühler 106 kann als integrierter Ladeluftkühler eingesetzt werden. Der Ladeluftkühler 106 weist eine quaderförmig Form mit einer Breite 331, einer Tiefe 332 und einer Höhe 333 auf. Eine Ladeluftdurchströmung 335 bewirkt, dass der Ladeluftkühler 106 von Ladeluft durchströmt wird. Die Ladelufidurchströmung 335 durchströmt dabei eine durch die Breite 331 und die Höhe 333 aufgespannte Querschnittsfläche des Ladeluftkühlers 106.

Im Folgenden wird auf das Ladeluftkühlervolumen eingegangen.

Das Volumen des Ladeluftkühlers 106 ist durch die drei Abmessungen des Kühlers 106, nämlich die Höhe 333, die Breite 331 und die Tiefe 332 beschrieben. Die Geometrien sind wie folgt definiert.

Die Kühlertiefe 332 korrespondiert mit der maximal abzuführenden Kühlleistung. Die maximal abzuführende Kühlleistung ergibt sich aus der maximalen Aufladung des Motors und somit aus der maximalen Literleistung des Motors. Somit gibt es für den Ladeluftkühler einen direkten Zusammenhang zwischen der Kühlediefe 332 und der Literleistung des Motors, wie es in Fig. 4 gezeigt ist.

Fig. 4 zeigt eine graphische Darstellung, in der die Kühlertiefe über die motorische Literleistung des Fahrzeugs (Motorleistung/Hubvolumen [kW/l]) aufgetragen ist, gemäß einem Ausführungsbeispiel der vorliegenden Erfindung. Bei der Kühtertiefe kann es sich um die in Fig. 3 gezeigte Tiefe 332 des Ladeluftkühlers handeln. Das Hubvolumen kann dem Hubvolumen des in Fig. 1 gezeigten Motors 102 entsprechen.

Gezeigt ist eine Kühlertiefe 332, eine maximale Kühiertiefe 432a und eine minimale Kühlertiefe 432b, jeweils in Millimetern.

Folgende Formel kann zur Bestimmung der Kühtertiefe [mm] eingesetzt werden:

$$Tiefe = 0{,}65 * Literleistung\ [kW/l] + 37\ \text{mit einer Toleranz von +/-15 mm.}$$

Gemäß einem Ausführungsbeispiel ergeben sich für eine Literleistung von 35kW/l eine Kühlertiefe von 60mm, eine maximale Kühlertiefe von 69mm und eine minimale Kühleriefe von 51 mm, für eine Literleistung von 75kW/l eine Kühiertiefe von 85mm, eine maximale Kühlertiefe von 97,75mm und eine minimale Kühiertiefe von 72,25mm, und für eine Literieistung von 120kW/l eine Kühlertiefe von 115mm, eine maximale Kühtertiefe von 132,25mm und eine minimale Kühlediefe von 97,75mm.

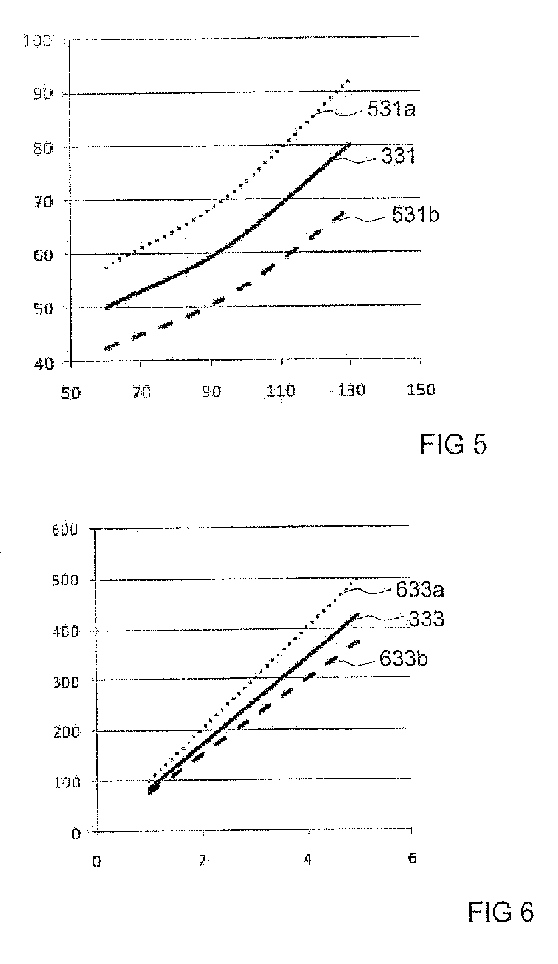

Fig. 5 zeigt eine graphische Darstellung, in der die Kühlerbreite über die Leistung des Fahrzeugs [kW] aufgetragen ist, gemäß einem Ausführungsbeispiel der vorliegenden Erfindung. Bei der Kühlerbreite kann es sich um die in Fig. 3 gezeigte Breite 331 des Ladeluftkühlers handeln. Die Leistung kann der Leistung des in Fig. 1 gezeigten Motors 102 entsprechen.

Gezeigt ist eine Kühlerbreite 331, eine maximale Kühlerbreite 531 a und eine minimale Kühlerbreite 531 b, jeweils in Millimetern.

Die Kühlerbreite 331 ergibt sich aus dem maximal zulässigen Ladeluftdruckverlust und dieser hängt von der Ladeluftdurchströmungsgeschwindigkeit (Querschnitt - Breite x Höhe - und Ladetuftmassenstrom) ab. Da die Höhe des Kühlers geometrisch gegeben ist, wie es im Zusammenhang mit Fig. 6 beschrieben wird, bleibt für die Breite des Kühlers ein direkter Zusammenhang zum Ladeluftmassenstrom und somit zur Leistung des Motors.

Folgende Formel kann zur Bestimmung der Kühlerbreite [mm] eingesetzt werden:

$$Breite = 0{,}0031 * Leistung\ [kW]^2 - 0{,}1656 * Leistung\ [kW] + 48{,}679,\ \text{mit einer Toleranz von +/-15 mm.}$$

Gemäß einem Ausführungsbeispiel ergeben sich für eine Motorleistung von 60kW eine Kühlerbreite von 50mm, eine maximale Kühlerbreite von 57,5mm und eine minimale Kühlerbreite von 42,5mm, für eine Motorleistung von 95kW eine Kühlerbreite von 61,2mm, eine maximale Kühlerbreite von 70,3mm und eine minimale Kühlerbreite von 52mm, und für eine Motorleistung von 130kW eine Kühlerbreite von 80mm, eine maximale Kühlerbreite von 92mm und eine minimale Kühlerbreite von 68mm.

Fig. 6 zeigt eine graphische Darstellung, in der die Kühlerhöhe über die Zylinderzahl aufgetragen ist, gemäß einem Ausführungsbeispiel der vorliegenden Erfindung. Bei der Kühlerhöhe kann es sich um die in Fig. 3 gezeigte Höhe 333 des Ladeluftkühlers handeln. Die Zylinderzahl kann der Zylinderzahl eines Motors, beispielsweise des in Fig. 1 gezeigten Motors 102 entsprechen.

Gezeigt ist eine Kühlerhöhe 333, eine maximale Kühlerhöhe 633a und eine minimale Kühlerhöhe 633b, jeweils in Millimetern.

Die maximal mögliche Kühlerhöhe 633a wird bestimmt durch den Zylinderdurchmesser, d.h. der integrierten Kühler ist maximal so lang (hoch), wie der Motorblock lang ist. Die Zylinderdurchmesser variieren zwischen 75 und 100 mm.

Folgende Formel kann zur Bestimmung der Kühlerhöhe [mm] eingesetzt werden:

$$\text{Höhe} = 85 * \text{Zylinderzahl mit einer Toleranz von +/-30 \%.}$$

Gemäß einem Ausführungsbeispiel ergeben sich für eine Zylinderanzahl von 1 eine minimale Kühlerhöhe von 75mm, eine Kühlerhöhe von 85mm und eine maximale Kühlerhöhe von 100mm, für eine Zylinderanzahl von 2 eine minimale Kühlerhöhe von 150mm, eine Kühlerhöhe von 170mm und eine maximale Kühlerhöhe von 200mm, für eine Zylinderanzahl von 3 eine minimale Kühlerhöhe von 225mm, eine Kühlerhöhe von 255mm und eine maximale Kühlerhöhe von 300mm, für eine Zylinderanzahl von 4 eine minimale Kühlerhöhe von 300mm, eine Kühlerhöhe von 340mm und eine maximale Kühlerhöhe von 400mm, und für eine Zylinderanzahl von 5 eine minimale Kühlerhöhe von 375mm, eine Kühlerhöhe von 425mm und eine maximale Kühlerhöhe von 500mm.

Im Folgenden wird auf das Einlassvolumen, nämlich dem Saugrohrvolumen vor dem integriertem Ladeluftkühler, beispielsweise des in Fig. 1 gezeigten Saugrohrmoduls, eingegangen.

Das Einlassvolumen wird durch zwei Größen vorgegeben. Die eine Größe ist der hydraulische Durchmesser in der Ladeluftleitung. Dieser kann durch die Leitung, eine Drosselklappe bzw. durch eine direkte Schnittstelle am Saugrohr bestimmt sein. Die zweite Größe ist durch die Querschnittsfläche des Ladeluftkühlers (Höhe x Breite des Kühlers), beispielsweise wie in Fig. 3 gezeigt bestimmt. Die Kühlerbreite entspricht dabei in erster Näherung dem hydraulischen Durchmesser.

Für die geometrischen Größen gilt folgendes:

$$\text{Einlassvolumen} = \text{Faktor x hydraulischer Durchmesser x Kühlerhöhe x Kühlerbreite}$$

| | mit | 40mg < | hydraulischer Durchmesser < | < 80 mm |
|---|---|---|---|---|
| | und | 75mm < | Kühlerhöhe | < 500mm |

Der Faktor liegt gemäß diesem Ausführungsbeispiel bei mittigem Eintritt in das Saugmodul zwischen 0,5 und 1,5 und bei seitlichem Eintritt zwischen 0,2 und 0,1 oder zwischen 0,4 und 0,05.

Für Motoren mit zwei Zylinderbänken, z.B. V-Motoren, und dementsprechend zwei Saugrohren mit je einem Ladeluftkühler, d.h. zwei Saugrohrmodulen, gelten obige geometrischen Verhältnisse für jedes Saugrohrmodul.

Für Fahrzeuge mit einer Motorleistung von mehr als 130kW bei ein Vorkühler eingesetzt wird, gelten obige Zusammenhänge für den integrierten Kühler.

Die genannten Dimensionen und Geometrieverhältnisse gelten auch für Saugrohre mit integriertem Hochtemperatur- und Niedertemperatur-Ladeluftkühler. Dabei können zwei Kühler oder zwei kombinierte Kühler mit Hochtemperatur - Kühlmittel-Kühlung als 1.Stufe und Niedertemperatur-Kühlmittel-Kühlung als 2.Stufe in einer sogenannten kaskadierten HT-NT-Ladluftkühlung verschaltet sein.

Die beschriebenen Ausführungsbeispiele sind nur beispielhaft gewählt und können miteinander kombiniert werden.

**Bezugszeichenliste**

| | |
|---|---|
| 102 | Motor |
| 104 | vorgeschaltetes Saugrohr |
| 106 | Ladeluftkühler |
| 108 | nachgeschaltetes Saugrohr |
| 211,212,213 | Temperaturverteilungen |
| 221, 222, 223 | Bewertungen |
| 225 | Sammlervolumen |
| 227 | Druckverlust |
| 331 | Breite |
| 332 | Tiefe |
| 333 | Höhe |
| 335 | Ladeluftdurchströmung |
| 432a, 432b | Kühlertiefen |
| 532a, 532b | Kühlerbreiten |
| 632a,632b | Kühlerhöhen |

**Patentansprüche**

1. Ausgangsseitiges Saugrohr (108) eines Saugrohrmoduls mit einem integrierten Ladeluftkühler (106) für einen Motor (102) eines Fahrzeugs, **dadurch gekennzeichnet, dass** ein Volumen des ausgangsseitigen Saugrohrs (108) abhängig von einem Hubvolumen des Motors (102) und einer Anzahl von Abgasrückführung-Eindüsungen des Motors bestimmt ist.

2. Ausgangsseitiges Saugrohr (108) gemäß Anspruch 1, bei dem das Volumen des ausgangsseitigen Saugrohrs (108) abhängig von dem Hubvolumen des Motors (102) und einem von der Anzahl von Abgasrückführung-Eindüsungen des Motors abhängigen Rückführungsparameter bestimmt ist.

3. Verfahren zur Dimensionierung eines ausgangsseitigen Saugrohrs (108) eines Saugrohrmoduls mit einem integrierten Ladeluftkühler (106) für einen Motor (102) eines Fahrzeugs, das die folgenden Schritte umfasst:

   Bestimmen eines Volumens des ausgangsseitigen Saugrohrs (108) abhängig von einem Hubvolumen des Motors (102) und einer Anzahl von Abgasrückführung-Eindüsungen des Motors.

4. Eingangsseitiges Saugrohr (104) eines Saugrohrmoduls mit einem integrierten Ladeluftkühler (106) für einen Motor (102) eines Fahrzeugs, **dadurch gekennzeichnet**, das ein Volumen des eingangsseitigen Saugrohrs (104) abhängig von einem Durchmesser einer Eingangsöffnung des Saugrohrmoduts, einer Querschnittsfläche des integrierten Ladeluftkühlers (106) und einem Volumenparameter bestimmt ist.

5. Eingangsseitiges Saugrohr (104) gemäß Anspruch 4, bei dem die Querschnittsfläche des integrierten Ladeluftkühlers (106) abhängig von einer Leistung des Motors (102) und einem Zylinderdurchmesser des Motors oder eines Eintrittsstutzendurchmessers des Saugrohrmoduls bestimmt ist.

6.  Verfahren zur Dimensionierung eines eingangsseitigen Saugrohrs (104) eines Saugrohrmoduls mit einem integrierten Ladeluftkühler (106) für einen Motor (102) eines Fahrzeugs, das die folgenden Schritte umfasst:

Bestimmen eines Volumens des eingangsseitigen Saugrohrs (104) abhängig von einem Durchmesser einer Eingangsöffnung des Saugrohrmoduls, einer Querschnittsfläche des integrierten Ladeluftkühlers (106) und einem Votumenparameter.

7.  Ladeluftkühler (106) für ein Saugrohrmodul für einen Motor (102) eines Fahrzeugs, **dadurch gekennzeichnet, dass** eine Tiefe des Ladeluftkühlers abhängig von einer Literleistung des Motors, eine Kühlerbreite des Ladeluftkühlers abhängig von einer Leistung des Motors und eine Kühlerhöhe des Ladeluftkühlers abhängig von einer Zylinderzahl des Motors bestimmt ist.

8.  Ladeluftkühler (106) gemäß Anspruch 7, bei dem eine Tiefe des Ladeluftkühlers aus einer Summe aus einem ersten Summanden und einem Produkt aus einem ersten Faktor und der Literleistung des Motors bestimmt ist, die Kühlerbreite des Ladeluftkühlers aus einer Summe aus einem Produkt aus einem zweiten Faktor und der quadrierten Leistung des Motors, einem Produkt aus einem negativen dritten Faktor und der Leistung des Motors sowie einem zweiten Summanden bestimmt ist, und die Kühlerhöhe des Ladeluftkühlers aus einem Produkt eines vierten Faktors mit der Zylinderzahl des Motors bestimmt ist.

9.  Verfahren zur Dimensionierung eines Ladeluftkühlers (106) für ein Saugrohrmodul für einen Motor (102) eines Fahrzeugs, das die folgenden Schritte umfasst:

Bestimmen einer Tiefe des Ladeluftkühlers abhängig von einer Literleistung des Motors;
Bestimmen einer Kühlerbreite des Ladeluftkühlers abhängig von einer Leistung des Motors; und
Bestimmen einer Kühlerhöhe des Ladetuftkühters abhängig von einer Zylinderzahl des Motors.

10. Saugrohrmodul für einen Motor (102) eines Fahrzeugs, mit folgenden Merkmalen:

einem Ladeluftkühler (106) gemäß einem der Ansprüche 7 oder 8;
ein dem Ladeluftkühler nachgeschaltetes Saugrohr (108), gemäß einem Verfahren gemäß einem der Ansprüche 1 bis 2; und
ein dem Ladeluftkühler vorgeschaltetes Saugrohr (104), gemäß einem der Ansprüche 4 bis 5.

11. Motorsystem eines Fahrzeugs mit einem Saugrohrmodul gemäß Anspruch 10 und dem Motor (102).

FIG 1

FIG 2

FIG 3

FIG 4

FIG 5

FIG 6